Europäisches Patentamt

European Patent Office

Office européen des brevets

(11) Publication number: **0 210 254 B1**

(12) **EUROPEAN PATENT SPECIFICATION**

(45) Date of publication of patent specification: **19.12.90**

(51) Int. Cl.⁵: **F 16 K 31/163**, F 16 K 31/12

(21) Application number: **86901193.2**

(22) Date of filing: **29.01.86**

(86) International application number:
**PCT/US86/00155**

(87) International publication number:
**WO 86/04400 31.07.86 Gazette 86/17**

(54) **NORMALLY CLOSED FLUID SWITCHING LOGIC ELEMENT.**

(30) Priority: **29.01.85 US 696097**

(43) Date of publication of application:
**04.02.87 Bulletin 87/06**

(45) Publication of the grant of the patent:
**19.12.90 Bulletin 90/51**

(84) Designated Contracting States:
**DE FR GB IT SE**

(56) References cited:
| | |
|---|---|
| DE-B-1 132 770 | US-A-2 487 418 |
| FR-A-1 334 844 | US-A-2 624 542 |
| GB-A- 6 690 | US-A-2 654 393 |
| GB-A- 783 927 | US-A-2 800 142 |
| US-A- 551 370 | US-A-3 102 553 |
| US-A-2 351 873 | US-A-3 862 738 |
| US-A-2 366 596 | US-A-3 981 479 |
| US-A-2 398 775 | US-A-45 317 07 |
| US-A-2 480 712 | |

(73) Proprietor: **SUN HYDRAULICS CORPORATION**
**1500 University Parkway**
**Sarasota, FL 33580 (US)**
(73) Proprietor: **CLARK, Richard J.**
**2719 Fort Worth Street**
**Sarasota, FL 33581 (US)**

(72) Inventor: **CLARK, Richard J.**
**2719 Fort Worth Street**
**Sarasota, FL 33581 (US)**

(74) Representative: **Blanco White, Henry Nicholas**
**et al**
**ABEL & IMRAY Northumberland House 303-306**
**High Holborn**
**London WC1V 7LH (GB)**

Courier Press, Leamington Spa, England.

## Description

Technical Field

This invention relates generally to a fluid valve and more particularly to a switching logic element having a normally closed characteristic.

Switching logic elements utilize an unbalanced poppet which is spring loaded on a seat; however, without additional fluid pressure to bias the poppet against the seat, flow can occur between the input and output ports. These valves are called "normally open" because of the need for fluid pressure to close them. The complementary logic element — normally closed — has not previously been available. Such a normally closed logic element would require a positive or pilot pressure input to be opened and to remain open.

The need for a pilot pressure is an operating requirement for fail safe applications, i.e. if the source of fluid pressure is cut off either inadvertently or because of system shut down, the valve should close to prevent loss of load supporting pressure by flow through the logic element.

Background Art

Prior art, U.S. Patent No. 2,799,466, discloses a valve held in its closed position by spring and hydraulic pressure until an electrically operated valve opens relieving the hydraulic pressure.

Prior art, U.S. Patent No. 3,076,630, discloses a valve held in its closed position by spring and hydraulic pressure until a solenoid is actuated to relieve the hydraulic pressure.

Prior art, U.S. Patent No. 3,083,727, discloses a valve held in its closed position by spring and hydraulic pressure until an abrupt pressure increase at the valve inlet causes it to open because the pressure holding it closed does not rise as quickly.

Prior art, U.S. Patent No. 3,858,841, discloses a valve held in the closed position by inlet pressure ducted above the valve until a solenoid is energized to relieve this closing pressure.

Prior art, U.S. Patent No. 3,903,919, discloses a valve which has a normally closed configuration. The valve is held closed by spring and hydraulic pressure until a solenoid is energized to relieve the hydraulic pressure.

Prior art, U.S. Patent No. 4,283,040, discloses a valve which will remain open while a solenoid is energized. When the solenoid is de-energized, hydraulic pressure increases behind the valve causing it to close.

Prior art, U.S. Patent No. 4,305,566, discloses a normally open valve which has a two-stage operation. A solenoid causes the first stage to close which results in a hydraulic pressure rise which, together with spring force, closes the valve.

Prior art, U.S. Patent No. 4,463,929, discloses a valve held closed by spring and hydraulic pressure. In one mode of operation, an abrupt increase in inlet pressure will cause the valve to open because of the lag for the closing hydraulic pressure to rise.

U.S. Patent No. 3 981 479, on which the preamble to claim 1 is based, and U.S. Patent No. 551 370 discloses valves each of which is held in its closed position by spring pressure, and by fluid pressure acting on one side of it, and can be opened either by fluid presure acting on the other side of the valve or by a control pressure acting on a control piston.

The invention provides a normally closed fluid switching logic element having open and closed positions for controlling flow of fluid therethrough, comprising: a body (10) having a longitudinally extending bore (12) therein which bore is open at one end and closed at the other end; a poppet seat (24) at the said open end of the said bore; a shoulder (28) extending radially inwardly from the body into the said bore; a piston (14) slidably and sealingly supported in said bore and having first and second ends; and a stem extending to a distal end and having a poppet (22) disposed at the distal end; the poppet having a closed position when it is positioned against the poppet seat, the said closed position defining the said closed position of the logic element, and the poppet having an open position when it is displaced from the poppet seat, the said open position defining the said open position of the logic element; a spring (26) that has one end positioned against a surface of the said stem and a second end positioned against the said shoulder, and that biases the poppet against the poppet seat; a first, primary fluid, port (36) formed by the poppet and the poppet seat when the poppet is displaced from the poppet seat; a first, variable volume, chamber (34) defined by the second end of the piston, the body, the stem, and the poppet; a second, primary fluid, port extending from the said first chamber through the body; a second, variable volume pilot pressure, chamber (30) defined by the said closed end of the bore, the body, and the first end of the piston; and a third, pilot pressure regulating fluid, port (32) extending from the said pilot pressure chamber thrugh the body for regulating the pilot pressure in the said pilot pressure chamber; characterised in that the said piston (14) forms with the said stem and poppet (22) a piston assembly, with the stem extending from the second end of the piston to the said distal end; in that fluid pressure in the said first chamber (34) acting on the piston assembly tends, at least when the poppet is closed, to urge the piston assembly into the closed position of the poppet, the presence of a pilot pressure in the said pilot pressure chamber (30) being required for fluid flow between the said first and second ports; and in that the body is adapted for receiving different piston assemblies for providing the pilot pressure by different modes.

Various forms of logic element constructed in accordance with the invention will now be described by way of example only with reference to the accompanying drawings, in which:

Figure 1 is a cross-section of a normally closed fluid switching logic element in accordance with the invention;

Figure 2 is a detail of an end view of the logic element of Figure 1;

Figure 3 is an alternative embodiment in cross-section having a pilot pressure derived from the pressure applied at the central port;

Figure 4 is an alternative embodiment in cross-section having the pilot pressure derived from the pressure applied at the radial ports; and

Figure 5 is an alternative embodiment in cross-section having a manual over-ride feature and a structure in which pilot pressure is derived from either radial ports or the central port.

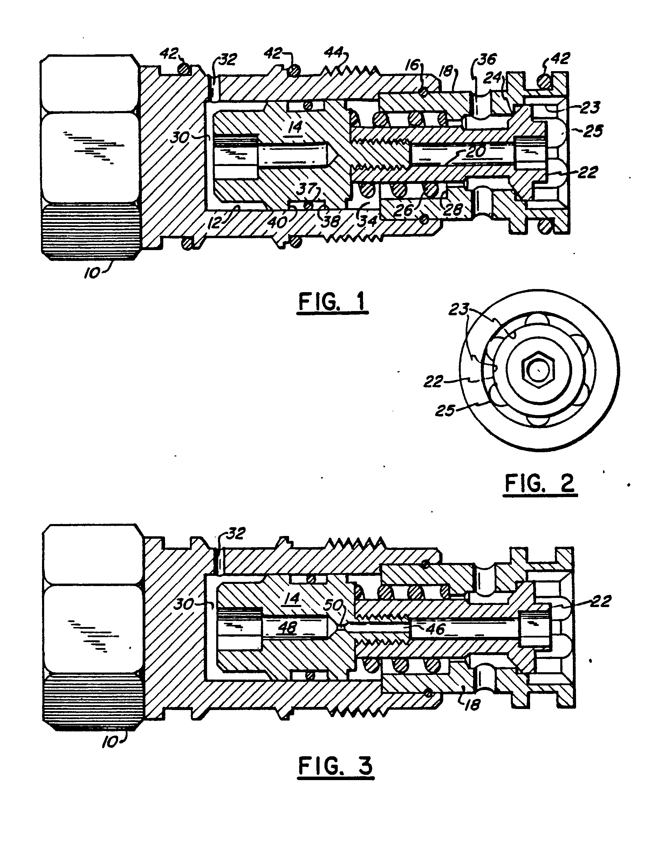

Referring to Figure 1, a normally closed fluid switching logic element will now be described. Although the specific configuration shown in Figure 1 and other configurations described herein were designed and built for operation with hydraulic liquid, it should be recognized that other liquid or gas switching logic elements are also contemplated. Body 10 has a longitudinally extending bore 12 in which piston 14 is slidably supported. Body 10 has secured to it, by a wire loop an extension 18. Wire loop 16 is used as the fastening device only by way of example; other fastening arrangements may also be used. Piston 14 has secured to it, e.g. by screw threads, an extension 20 which includes a poppet 22. In the position shown in Figure 1, poppet 22 is held against seat 24 of extension 18 by spring 26. One end of spring 26 bears against shoulder 28 of extension 18, while the other end of spring 26 bears against one side of piston 14. Piston 14, and poppet 22, are consequently biased to force poppet 22 against seat 24 (to the left in Figure 1).

In the configuration illustrated in Figure 1, body 10 and one side of piston 14 to form a variable volume chamber 30 with port 32 providing the only fluid passage to chamber 30. On the other side of piston 14 is variable volume chamber 34 which has a plurality of radially extending ports 36 through extension 18. Ports 36 are primary fluid ports. Poppet 22, when moved away from seat 24 (to the right in Figure 1), provides a central port which is also a primary port communicating with chamber 34. Thus fluid will flow from radial ports 36 to the central port when poppet 22 is unseated, or will flow in the reverse direction depending on which pressure is higher.

As is customary with fluid handling elements, O-ring 37, positioned between shoulders 38 and 40 provides a seal between variable volume chambers 30 an 34.

It will be observed that fluid pressure applied to the outer side of poppet 22 will tend to force it against seat 24 rather than tend to open it. Also, fluid pressure within variable volume chamber 34 will also tend to force poppet 22 against seat 24 because of the greater area of piston 14 exposed to this pressure when compared with the area of poppet 22 exposed to this pressure. Thus logic element closing forces will be exerted by both these pressures and spring pressure. It will be appreciated by those skilled in the art that these forces can be modified by changing differential areas and springs. Also, it will be recognized that friction forces which must be overcome may be significant due to the close fits and seals used to prevent leakage, although some currently available seal elements may reduce friction to a negligible force.

The logic element of Figure 1 can only be opened by applying fluid pressure in variable volume chamber 30 through port 32 of an amount sizable enough to overcome the closing forces discussed above. Moreover, if this opening pressure drops, poppet 22 will reseat, thereby preventing fluid from moving between ports 36 and the central poppet port.

The normally closed fluid switching logic element of Figure 1 and the alternate configurations still to be described, have exterior body configurations which facilitate their mounting within a manifold to thereby become components in a fluid circuit. The operating modes and principles are equally applicable to other uses which may require different exterior body configurations. Since these exterior body feature are not part of the present invention and are similar or identical to those skilled in the art, no detailed discussion of these will be presented. O-rings 42, which may be supplemented by additional seals such as sacrificial seals, are located at positions where sealing is required with shoulders adjacent to them to restrict axial movement. Threads 44 have been provided for mounting as mentioned above.

Referring to Figure 2, the outer circumference of poppet 22 (which can be seen in Figure 1 to extend axially for a short distance) is guided and supported when it moves outwardly off its seat on lands 23 which are interspaced with axially extending grooves 25. This arrangement provides free flow of fluid through the central port while still maintaining poppet 22 in correct alignment.

Referring now to Figure 3, an alternative embodiment of the normally closed fluid switching logic element of Figure 1 will be described. Body 10 and its extension 18 remain the same as in Figure 1. Passage 46, however, is provided in this embodiment between cavity 48 (which extends from variable volume chamber 30) and the central opening in poppet 22. Orifice 50 is located in passage 46 to produce a pressure drop so that the pressure in chamber 30 will be somewhat less than the pressure outside poppet 22. With passage 32 closed and the pressure outside poppet 22 rising, a pressure will be reached which will cause piston 14 to move and poppet 22 to open. Thus the pressure outside poppet 22 provides the pilot signal or pressure to open the poppet port. When passage 32 is opened the fluid in chamber is vented and poppet 22 will close.

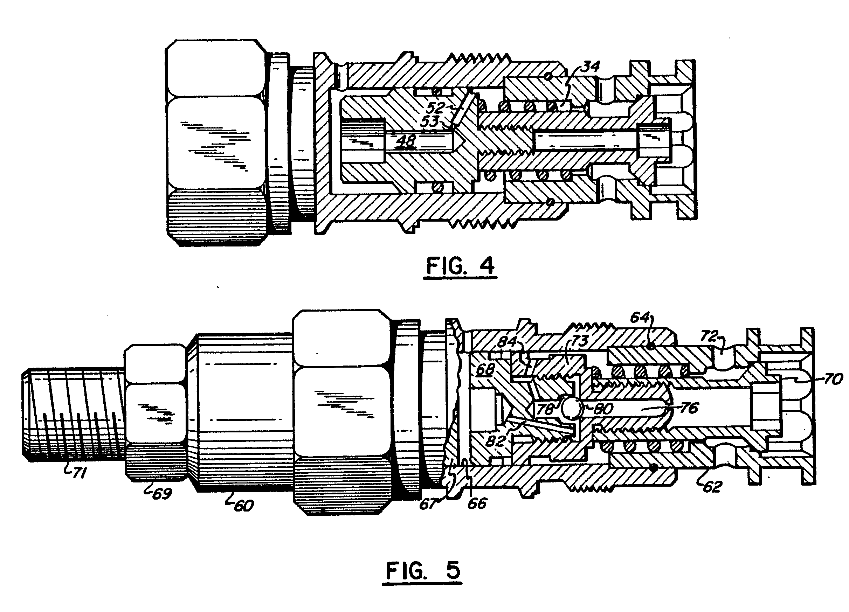

Figure 4, is an alternate embodiment of the normally closed fluid switching logic element of Figure 1 with the pilot signal in this case derived from the pressure in variable chamber 34. The only chamber from the Figure 1 embodiment is the addition of passage 52 containing orifice 53 which extends between cavity 48 and variable volume chamber 34. The figure 4 embodiment provides a logic element which remains closed until the pressure in variable volume chamber 34 rises high enough so that the resulting pressure in variable volume chamber 30 causes poppet 22 to open. This pressure will rise only if passage 32 is closed, and poppet 22 will reclose if passage 32 is opened to relieve the pressure in chamber 30.

Figure 5 discloses aditional features which can be used with the basic normally closed fluid switching logic element of Figure 1 to provide other capabilities. Element body 60 has secured to it extension 62 using wire loop 64 (the use of a wire loop is only exemplary of one way in which they may be secured). Body 60 has a longitudinally extending bore 66 in which piston 68 is slidably supported. Also contained in bore 66 is manual adjusting base 67 which can be screwed in by loosening lock nut 69 and turning threaded end 71 to move from the position shown in Figure 4 to a position in which it will force piston 68 to the right (as shown in Figure 4). As with the previous embodiments, piston 68 is connected to poppet 70, so that moving piston 68 to the right will unseat poppet 70 and open the element for flow between radial ports 72 and the central port about the periphery of poppet 70. (An intermediate element 73 is illustrated which is secured between piston 68 and poppet 70, in this example of threads. Element 73 is fabricated as a separate item for facilitating manufacturing, but the element functions as if piston 68 and poppet 70 were the same piece.) This manual adjusting feature over-rides the normal need for a fluid pressure signal in chamber 74 before fluid will flow through the element; however, the manual over-ride may also be used to create only a slight flow, with a pressure signal to chamber 74 causing full opening of the central port by displacement of poppet 70.

The Figure 5 embodiment also incorporates two tortuous passages to chamber 74. One passage 76 extends centrally from the bore through poppet 70 to chamber 78 which contains ball 80. Chamber 78 is connected by passage 82 to chamber 74. Another passage 84 extends from variable chamber 86 to chamber 78. Ball 80 will assume a position to block either passage 76 or passage 84 in favor of the passage having the higher fluid pressure. As a consequence, a pilot signal to open poppet 70 may be derived from fluid pressure at poppet 70 or at ports 72.

All of the embodiments of the invention provide a normally closed fluid switching logic element which will interrupt fluid flow between two ports unless a pilot pressure signal of sufficient magnitude is provided to open the fluid passage.

## Claims

1. A normally closed fluid switching logic element having open and closed positions for controlling flow of fluid therethrough, comprising: a body having a longitudinally extending bore therein which bore is open at one end and closed at the other end; a poppet seat at the said open end of the said bore; a shoulder extending radially inwardly from the body into the said bore; a piston slideably and sealingly supported in said bore and having first and second ends; a stem extending to a distal end and having a poppet disposed at the distal end; the poppet having a closed position when it is positioned against the poppet seat, the said closed position defining the said closed position of the logic element, and the poppet having an open position when it is displaced from the poppet seat, the said open position defining the said open position of the logic element; a spring that has one end positioned against a surface of the said stem and a second end positioned against the said shoulder, and that biases the poppet against the poppet seat; a first, primary fluid, port formed by the poppet and the poppet seat when the poppet is displaced from the poppet seat; a first, variable volume, chamber defined by the second end of the piston, the body, the stem, and the poppet; a second primary fluid, port extending from the said first chamber through the body; a second, variable volume pilot pressure, chamber defined by the said closed end of the bore, the body, and the first end of the piston; and a third, pilot pressure regulating fluid, port extending from the said pilot pressure chamber through the body for regulating the pilot pressure in the said pilot pressure chamber; characterised in that the said piston forms with the said stem and poppet a piston assembly, with the stem extending from the second end of the piston to the said distal end; in that fluid pressure in the said first chamber acting on the piston assembly tends, at least when the poppet is closed, to urge the piston assembly into the closed position of the poppet, the presence of a pilot pressure in the said pilot pressure chamber being required for fluid flow between the said first and second ports; and in that the body is adapted for receiving different piston assemblies for providing the pilot pressure by different modes.

2. A logic element as claimed in claim 1, including: a passage from the pilot pressure chamber through the poppet, which passage includes a restricted orifice portion and by which a pressure at said poppet will produce a pilot pressure in the said pilot pressure chamber.

3. A logic element as claimed in claim 1, including a passage from the pilot pressure chamber to the said first chamber, which passage includes a restricted orifice portion, and by which a pressure in the said first chamber will produce a pilot pressure in the pilot pressure chamber.

4. A logic element as claimed in claim 1, including adjustable means mounted in the body for moving the poppet a desired distance off the poppet seat.

5. A logic element as claimed in claim 1, including a passage from the pilot pressure chamber through the poppet; a passage from the pilot pressure chamber to the said first chamber; and means closing one of those passages in response to opening of the other, the arrangement being such that a pressure at the poppet or a pressure in the said first chamber will produce a pilot pressure in the pilot pressure chamber.

6. A logic element as claimed in claim 5, wherein the said passages connect with a common chamber and the said means closing one of those passages in response to opening of the other is a ball in the said common chamber.

7. A logic element as claimed in any one of claims 1 to 6, comprising: a body extension having a longitudinal passage through it and first and second ends, the said first end of the body extension being connected to the body at the said open end of the said bore and the said body extension having the said poppet seat formed at its said second end and a plurality of lands and grooves extending longitudinally from said poppet seat; and wherein the said poppet is slideably mounted on the said lands.

8. A logic element as claimed in any one of claims 1 to 7, including: threads on the exterior of said body to secure it in a receptacle.

**Patentansprüche**

1. Ein normalerweise geschlossenes logisches Fluidschaltelement mit einer Offenposition und einer Schließposition für die Steuerung des Durchströmens von Fluid, umfassend: Einen Korpus mit einer sich längs hindurch erstreckenden Bohrung, die an einem Ende offen ist und am anderen Ende geschlossen ist; ein Ventilsitz an dem offenden Ende der Bohrung; eine sich radial von dem Korpus in die Bohrung erstreckende Schulter; einen in der Bohrung gleitbeweglichen und abdichtend abgestützten Kolben mit einem ersten und einem zweiten Ende; einen sich zu einem freien Ende erstreckenden Schaft, an welchem freien Ende ein Ventilteller angeordnet ist; wobei der Ventilteller eine Schließposition aufweist, wenn er gegen den Ventiltellersitz positioniert ist, welche geschlossene Position die genannte Schließposition des logischen Elementes definiert und wobei der Ventilteller eine offene Position besitzt, wenn er von dem Ventiltellersitz abgehoben ist, wobei diese offene Position die Öffnungsposition des logischen Elementes definiert; eine Feder, die mit einem Ende gegen eine Oberfläche des Schaftes und mit einem zweiten Ende gegen die Schulter positioniert ist und den Ventilteller gegen den Ventilsitz vorspannt; einen ersten Primärfluiddurchlaß gebildet von dem Ventilteller und dem Ventiltellersitz, wenn der Ventilteller von dem Ventiltellersitz entfernt ist; eine erste volumenvariable Kammer, begrenzt von dem zweiten Ende des Kolbens, dem Korpus, dem Schacht, und dem Ventilteller; einen zweiten Primärfluiddurchbruch, der sich von der ersten Kammer durch den Korpus erstreckt; eine zweite volumenvariable Pilotdruckkammer, begrenzt von dem geschlossenen Ende der Bohrung, dem Korpus, und dem ersten Ende des Kolbens; und einen dritten Durchbruch für die Pilotdruckeinstellung des Fluids, der sich von der Pilotdruckkammer durch den Korpus erstreckt für die Einstellung des Pilotdrucks in der Pilotdruckkammer; dadurch gekennzeichnet, daß der Kolben mit dem Schacht und dem Ventilsitz eine Kolbenbaugruppe bildet, bei der sich der Schacht von dem zweiten Ende des Kolbens zu dem freien Ende erstreckt, daß der Fluiddruck in der ersten Kammer auf die Kolbenbaugruppe einwirkt mit der Tendenz, mindestens dann, wenn das Ventil geschlossen ist, die Kolbenbaugruppe in die Schließposition des Ventils vorzuspannen, wobei das Vorhandensein eines Pilotdrucks in der Pilotdruckkammer erforderlich ist für die Fluidströmung zwischen den genannten ersten und zweiten Durchbrüchen, und daß der Korpus ausgebildet ist für die Aufnahme unterschiedlicher Kolbenbaugruppen für das Bereitstellen des Pilotdrucks unter unterschiedlichen Moden.

2. Ein Logikelement nach Anspruch 1 umfassend: Eine Passage aus der Pilotdruckkammer durch das Ventil, welche Passage einen Abschnitt eingeschnüter Öffnung umfaßt und durch die ein Druck auf dem Ventil einen Pilotdruck in der Pilotdruckkammer erzeugt.

3. Ein Logikelement nach Anspruch 1 umfassend eine Passage aus der Pilotdruckkammer zu der ersten Kammer, welche Passage einen Abschnitt eingeschnürten Durchlasses umfaßt, wodurch ein Druck in der ersten Kammer einen Pilotdruck in der Pilotdruckkammer erzeugt.

4. Ein Logikelement nach Anspruch 1 umfassend einstellbare Mittel, die in dem Korpus montiert sind für die Bewegung des Ventils um eine gewünchte Distanz von dem Ventilsitz weg.

5. Ein Logikelement nach Anspruch 1 umfassend eine Passage von der Pilotdruckkammer durch das Ventil, eine Passage von der Pilotdruckkammer zu der ersten Kammer und Mittel zum Absperren einer dieser Passagen im Ansprechen auf das Öffnen der anderen, wobei die Anordnung so getroffen ist, daß ein Druck auf das Ventil oder ein Druck in der ersten Kammer einen Pilotdruck in der Pilotdruckkammer erzeugt.

6. Ein Logikelement nach Anspruch 5, bei dem die Passagen mit einer gemeinsamen Kammer verbunden sind und die eine der Passagen im Ansprechen auf das Öffnen der anderen sperrenden Mittel eine Kugel in der gemeinsamen Kammer umfasst.

7. Ein Logikelement nach einem der Ansprüche 1 bis 6 umfassend: Eine Korpusverlängerung mit einer sich hindurch erstreckenden Längspassage mit ersten und zweiten Enden, wobei das erste Ende der Korpusverlängerung mit dem Korpus an dem offenen Ende der Bohrung verbunden ist und die Korpusverlängerung den Ventiltellersitz an ihrem zweiten Ende aufweist, sowie eine Mehrzahl von Vorsprüngen und Nuten, die sich von dem Ventilsitz in Längsrichtung weg erstrecken und bei dem der Ventilteller gleitbeweglich auf den Vorsprüngen montiert ist.

8. Ein Logikelement nach einem der Ansprüche 1 bis 7 umfassend Gewindegänge auf der Außenseite des Korpus für seine Befestigung in einem Gefäß.

**Revendications**

1. Un élément logique normalement fermé de commutation fluidique comportant des positions ouverte et fermée pour régler un écoulement de fluide qui le traverse, comprenant: un corps possédant un alésage qui s'y étend longitudinalement, ledit alésage étant ouvert à une extrémité et fermé à l'autre extrémité; un siège de poupée à ladite extrémité ouverte dudit alésage; un épaulement s'étendant radialement vers l'intérieur, dans ledit alésage, à partir du corps; un piston supporté à coulissement et de façon étanche dans ledit alésage et comportant des première et deuxième extrémités; une tige s'étendant vers une extrémité distale et comportant une poupée disposée à l'extrémité distale; la poupée possédant une position fermée lorsqu'elle est positionnée contre le siège de poupée, ladite position fermée définissant ladite position fermée de l'élément logique, et la poupée possédant une position ouverte lorsqu'elle est déplacée à l'écart du siège de poupée, ladite position ouverte définissant ladite position ouverte de l'élément logique; un ressort dont une extrémité est positionnée contre une surface de ladite tige et une deuxième extrémité est positionnée contre ledit épaulement, et qui sollicite la poupée contre le siège de poupée; un premier orifice, de fluide primaire, formé par la poupée et le siège de poupée lorsque la poupée est déplacée à l'écart du siège de poupée; une première chambre de volume variable, définie par la deuxième extrémité du position, le corps, la tige, et la poupée; un deuxième orifice, de fluide primaire, s'étendant depuis ladite première chambre à travers le corps; une deuxième chambre, à pression pilote, de volume variable, définie par ladite extrémité fermée de l'alésage, le corps, et la première extrémité du piston; et un troisième orifice, de fluide de réglage de pression pilote, s'étendant depuis ladite chambre de pression pilote à travers le corps pour régler la pression pilote dans ladite chambre de pression pilote; caractérisé en ce que ledit premier piston constitue avec ladite tige et ladite poupée un ensemble de piston, la tige s'étendant depuis la deuxième extrémité du piston vers ladite extrémité distale; en ce qu'une pression fluidique dans ladite première chambre, agissant sur l'ensemble de piston, tend, au moins lorsque la poupée este fermée, à solliciter l'ensemble de piston dans la position fermée de la poupée, la présence d'une pression pilote dans ladite chambre de pression pilote étant nécessaire pour un écoulement de fluide entre lesdits premier et deuxième orifices; et en ce que le corps est apte à recevoir différents ensembles de piston pour fournir la pression pilote par des modes différents.

2. Un élément logique selon la revendication 1, comprenant: un passage depuis la chambre de pression pilote à travers la poupée, ce passage comprenant une partie d'orifice restreint et face auquel une pression de ladite pression produit une pression pilote dans ladite chambre de pression pilote.

3. Un élément logique selon la revendication 1, comprenant und passage depuis la chambre de pression pilote vers ladite première chambre, ce passage comprenant une partie d'orifice restreint, et grâce auquel une pression dans ladite première chambre produit une pression pilote dans la chambre de pression pilote.

4. Un élément logique selon la revendication 1, comprenant des moyens réglables montés dans le corps pour déplacer la poupée d'une distance souhaitée à l'écart du siège de poupée.

5. Un élément logique selon la revendication 1, comrenant un passage depuis la chambre de pression pilote à travers la poupée; un passage depuis la chambre de pression pilote vers ladite première chambre; et des moyens fermant l'un de ces passages en réponse à l'ouverture de l'autre, l'agencement étant tel qu'une pression sur la poupée ou une pression dans ladite première chambre produit une pression pilote dans la chambre de pression pilote.

6. Un élément logique selon la revendication 5, dans lequel lesdits passages sont reliés à une chambre commune, et ledit moyen fermant l'un de ces passages en réponse à l'ouverture de l'autre est une bille située dans ladite chambre commune.

7. Un élément logique selon l'une quelconque des revendications 1 à 6, comprenant: un prolongement de corps comportant un passage traversant longitudinal et des première et deuxième extrémités, ladite première extrémité de l'extension de corps étant reliée au corps à ladite première extrémité d'ouverture dudit alésage et ledit prolongement de corps comportant ledit siège de poupée qui y est formé à sa dite deuxième extrémité et plusieurs nervures et rainures s'étendant longitudinalement à partir dudit siège de poupée; et dans lequel ladite poupée est montée à coulissement sur lesdite saillies.

8. Un élément logique selon l'une quelconque des revendications 1 à 7, comprenant: des filets sur l'extérieur dudit corps pour le fixer dans un réceptacle.

FIG. 1

FIG. 2

FIG. 3

1

FIG. 4

FIG. 5